(19) Europäisches Patentamt
European Patent Office
Office européen des brevets

(11) **EP 4 456 237 A1**

(12) **EUROPEAN PATENT APPLICATION**
published in accordance with Art. 153(4) EPC

(43) Date of publication:
**30.10.2024 Bulletin 2024/44**

(21) Application number: **23816376.0**

(22) Date of filing: **31.05.2023**

(51) International Patent Classification (IPC):
*H01M 10/056* (2010.01)     *H01M 10/052* (2010.01)

(52) Cooperative Patent Classification (CPC):
**H01M 10/052; H01M 10/056;** Y02E 60/10

(86) International application number:
**PCT/KR2023/007477**

(87) International publication number:
**WO 2023/234716 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 KR 20220066945**

(71) Applicant: **LG Energy Solution, Ltd.**
**Seoul 07335 (KR)**

(72) Inventors:
• **NAM, Sunghyun**
  **Daejeon 34122 (KR)**
• **HAN, Hyeaeun**
  **Daejeon 34122 (KR)**
• **KIM, Dong Kyu**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING COMPOSITE SOLID ELECTROLYTE**

(57)     The present invention relates to a method for preparing a composite solid electrolyte having high ionic conductivity and capable of continuous process, and mass production.

【Figure 1】

EP 4 456 237 A1

**Description**

[Technical Field]

This application claims the benefits of priorities based on Korean Patent Application No. 10-2022-0066945 filed on May 31, 2022 and Korean Patent Application No. 10-2023-0070136 filed on May 31, 2023, the entire contents of which are incorporated herein as part of this specification.

The present invention relates to a preparation method of a composite solid electrolyte.

[Background Art]

Since a lithium-ion battery using a liquid electrolyte has a structure in which the negative electrode and the positive electrode are partitioned by a separator, if the separator is damaged by deformation or external impact, a short circuit may occur, which may lead to dangers such as overheating or explosion. Therefore, it can be said that the development of a solid electrolyte that can secure safety in the field of the lithium ion secondary batteries is a very important task.

A lithium secondary battery using a solid electrolyte has the advantages of increasing the safety of the battery, preventing leakage of the electrolyte solution, improving the reliability of the battery, and making it easy to manufacture a thin battery. In addition, since lithium metal can be used as a negative electrode, energy density can be improved, and thus it is expected to be applied to high-capacity secondary batteries for electric vehicles, in addition to small secondary batteries, and is in the limelight as a next-generation battery.

Among the solid electrolytes, a solid polymer electrolyte may use a polymer material made of an ion conductive material or an inorganic material such as an oxide or sulfide having ion conductive properties, and a composite solid electrolyte in which polymer materials and inorganic materials are mixed is also proposed.

Such a conventional composite solid electrolyte was prepared by preparing a solution or slurry in which a polymer and an inorganic material were mixed and dispersed, and then casting the solution on a substrate by solution casting and drying it at a high temperature. However, the conventional preparation technology of the composite solid electrolyte has a limitation that it is difficult to prepare the composite solid electrolyte with improved ionic conductivity due to the non-uniform distribution of inorganic particles in the composite solid electrolyte because the uniform dispersion of inorganic materials in the polymer solution is not smooth.

In order to overcome these limitations of conventional composite solid electrolytes, there is a demand for technology which is capable of improving the ionic conductivity of a composite solid electrolyte including a polymer and an inorganic material uniformly dispersed therein, and for a method for preparing a composite solid electrolyte capable of performing a continuous process.

[Prior Art Document]

[Patent Document]

(Patent Document 1) Korean Laid-open Patent Publication No. 10-2017-0045011

[Disclosure]

[Technical Problem]

It is an object of the present invention to provide a method for preparing a composite solid electrolyte capable of improving ionic conductivity and performing is a continuous process.

In addition, it is another object of the present invention to provide an all-solid-state battery comprising the composite solid electrolyte prepared by the preparation method described above.

[Technical Solution]

In order to achieve the above objects, the present invention provides a method for preparing a composite solid electrolyte, comprising:

    (1) a first process of preparing a first composite layer by mixing a first polymer having a cross-linkable functional group and a ceramic compound;
    (2) a second process of preparing a ceramic ion conductor layer by sintering the first composite layer; and

(3) a third process of coating the ceramic ion conductor layer with a composition containing a second polymer and a lithium salt to prepare a second composite layer,

wherein the first to third processes are performed continuously.

In addition, the present invention provides a composite solid electrolyte prepared by the preparation method of the present invention, comprising a ceramic ion conductor layer containing a ceramic compound; a second polymer; and a lithium salt.

In addition, the present invention provides an all-solid-state battery containing a composite solid electrolyte prepared by the preparation method of the present invention.

[Advantageous Effects]

The method for preparing a composite solid electrolyte according to the present invention can effectively improve the ion conduction of lithium ions by forming a ceramic ion conductor containing the first polymer having a cross-linkable functional group and the ceramic compound, and can improve the ionic conductivity of the composite solid electrolyte by using the ceramic ion conductor.

In addition, the preparation method of the composite solid electrolyte according to the present invention can prepare the composite solid electrolyte in a continuous process, and enables mass production.

[Description of Drawings]

FIG. 1 is a flow chart of the preparation method of the composite solid electrolyte of the present invention.

FIG. 2 is an image obtained by photographing the first composite layer according to an embodiment of the present invention.

FIG. 3 is an image obtained by photographing the ceramic ion conductor layer formed by sintering the first composite layer according to an embodiment of the present invention.

FIG. 4 is a photograph obtained by taking the powder of the ceramic compound (Pristine LLZO) according to an embodiment of the present invention using a Scanning Electron Microscope (SEM) .

FIG. 5 is a photograph obtained by taking an image of the ceramic ion conductor layer according to an embodiment of the present invention using a Scanning Electron Microscope (SEM).

FIG. 6 is an image obtained by photographing the first composite layer according to an embodiment of the present invention.

FIG. 7 is an image obtained by photographing the ceramic ion conductor layer according to an embodiment of the present invention.

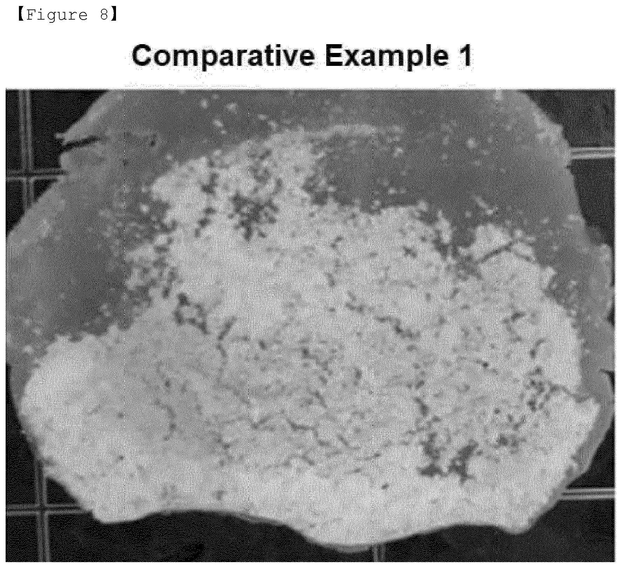

FIG. 8 is an image obtained by photographing the ceramic ion conductor layer according to Comparative Example 1.

[Best Mode]

Hereinafter, the present invention will be described in more detail to aid the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The conventional preparation method of the composite solid electrolyte was by coating a solution or slurry in which a polymer and an inorganic material were mixed and dispersed on a substrate film by a method such as solution casting, and drying it. However, this method had a problem that the ionic conductivity of the solid electrolyte was not improved due to the non-uniform dispersion of inorganic materials in the polymer solution.

In order to improve this, the present invention was intended to provide a method for preparing a composite solid electrolyte by forming the first composite in the form of a hydrogel with the first polymer having a cross-linkable functional group and the ceramic compound, and sintering it, and then, coating it with the second polymer and lithium salt.

In the preparation method of the composite solid electrolyte of the present invention, the ceramic compound is uniformly dispersed in the first composite to effectively form an ion conduction path of lithium ions, and thus a composite solid electrolyte with improved ionic conductivity can be obtained, and the preparation method of the composite solid electrolyte of the present invention can be prepared as a continuous process and enables mass production.

**Method for preparing composite solid electrolyte**

The present invention relates to a method for preparing a composite solid electrolyte, and the method for preparing the composite solid electrolyte of the present invention includes:

(1) a first process of preparing a first composite layer by mixing a first polymer having a cross-linkable functional group and a ceramic compound;
(2) a second process of preparing a ceramic ion conductor layer by sintering the first composite layer; and
(3) a third process of preparing a second composite layer by coating the ceramic ion conductor layer with a composition containing a second polymer and a lithium salt.

The first to third processes may be performed continuously.

The preparation method of the composite solid electrolyte can prepare a composite solid electrolyte with improved ionic conduction of lithium ions and improved ionic conductivity by preparing a first composite layer in which particles of a ceramic compound are uniformly dispersed in the first polymer through hydrogelation of the first polymer, and sintering the first composite layer and thus efficiently preparing the ceramic ion conductor layer.

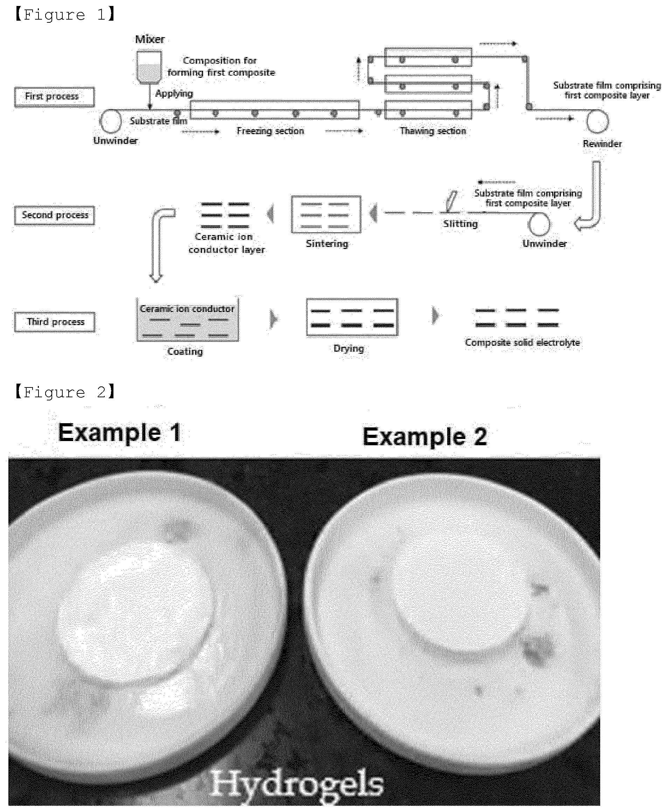

Hereinafter, the preparation method of the composite solid electrolyte according to the present invention will be described in detail for each step. FIG. 1 is a flow chart of a preparation method for a composite solid electrolyte according to certain embodiments of the present invention.

The first process is a step of preparing a first composite layer by mixing the first polymer having a cross-linkable functional group and a ceramic compound.

The first composite layer is prepared through hydrogelation of the first polymer, and has a form in which particles of a ceramic compound are uniformly dispersed in the first polymer in the form of a hydrogel. The first composite layer includes a cross-linked structure between the first polymer and the ceramic compound; and an amorphous polymer chain including a cross-linkable functional group, and the cross-linked structure may include (a) a cross-linkage between cross-linkable functional groups and (b) a cross-linkage between the cross-linkable functional group and the ceramic compound.

The cross-linkages of (a) and (b) may be physical cross-linkage or a chemical cross-linkage.

The (a) cross-linkage between cross-linkable functional groups may comprise a hydrogen bond between cross-linkable functional groups, and for example, the hydrogen bond may be a hydrogen bond between $OH^-$ groups.

The (b) cross-linkage between cross-linkable functional groups and ceramic compounds may comprise a bond by a Lewis acid-base interaction, and for example, the bond may be a bond between an -OH group and Li. The (b) cross-linkage between cross-linkable functional groups and ceramic compounds is a bond by a Lewis acid-base interaction, which may be a type of cross-linkage such as a metal-ligand bond.

In addition, (b) the cross-linkage between cross-linkable functional groups and ceramic compounds prevents aggregation between particles of the ceramic compound and allows the particles of the ceramic compound to be uniformly dispersed in the hydrogel and thus forms a hydrogel of the first polymer to prepare a first composite layer, and the ionic conductivity of the composite solid electrolyte can be improved through the ceramic ion conductor layer prepared by sintering the first composite layer.

Due to the cross-linked structure, the mobility of lithium ions inside the electrolyte is improved, and thus a composite solid electrolyte with improved ionic conductivity can be provided.

In the present invention, the cross-linkable functional group contained in the first polymer may have a property of forming a cross-linked structure by forming bonds as in the (a) and (b) cross-linkages.

For example, the cross-linkable functional group may include one or more selected from the group consisting of a hydroxyl group, a carboxyl group, and an amide group.

In addition, the weight average molecular weight (Mw) of the polymer having the cross-linkable functional group may be 80,000 g/mol to 130,000 g/mol, and specifically, may be 80,000 g/mol or more, 83,000 g/mol or more or 85,000 g/mol or more, and 90,000 g/mol or less, 110,000 g/mol or less or 130,000 g/mol or less. If the weight average molecular weight (Mw) of the polymer having the cross-linkable functional group is less than 80,000 g/mol, the bond by the cross-linkable functional group may not be sufficiently formed to obtain a cross-linked structure. If the weight average molecular weight (Mw) of the polymer having the cross-linkable functional group exceeds 130,000 g/mol, the entanglement of the polymer chain is increased in the polymer solution used in the preparation process, and the penetration rate of the solvent into the polymer chain is decreased. Accordingly, gelation of the polymer is accelerated, the solubility of the polymer is lowered, the bonding by the cross-linkable functional group cannot be performed smoothly, and thus the formation of a cross-linked structure may not be easy.

In addition, the first polymer having the cross-linkable functional group may include one or more selected from the group consisting of polyvinyl alcohol (PVA), gelatin, methylcellulose, agar, dextran, poly(vinyl pyrrolidone), poly(acryl amide), poly(acrylic acid)(PAA), starch-carboxymethyl cellulose, hyaluronic acid-methylcellulose, chitosan, poly(N-isopropylacrylamide) and amino-terminated polyethylene glycol (amino-terminated PEG). Preferably, the polymer having the cross-linkable functional group may be PVA, and the PVA can be efficiently phase separated from the solvent upon freezing in the preparation process of the composite solid electrolyte, and it may be advantageous to form a cross-linked structure by the bonds (a) and (b) induced from the cross-linkable functional group of PVA phase separated from the solvent.

The ceramic compound may be an oxide-based or phosphate-based solid electrolyte. The oxide-based or phosphate-based solid electrolyte may be one or more from the group consisting of a Garnet type lithium-lanthanum-zirconium oxide based compound (LLZO, $Li_7La_3Zr_2O_{12}$), perovskite type lithium-lanthanum-titanium oxide based compound (LLTO, $Li_{3x}La_{2/3-x}TiO_3$), NASICON type lithium-aluminum-titanium phosphate based compound of phosphate system (LATP, $Li_{1+x}Al_xTi_{2-x}(PO_4)_3$), lithium-aluminum-germanium phosphate based compound (LAGP, $Li_{1.5}Al_{0.5}Ge_{1.5}(PO_4)_3$), lithium-silicon-titanium phosphate based compound (LSTP, $LiSiO_2TiO_2(PO_4)_3$) and lithium-lanthanum-zirconium-titanium oxide based (LLZTO) compound. The oxide-based or phosphate-based solid electrolyte requires a sintering process at 1000 °C or higher because the grain boundary resistance is very high. Due to this, there are problems such as volatilization of lithium at high temperature, phase transition, and formation of impurity phases. However, the oxide-based or phosphate-based solid electrolyte generally has an ionic conductivity value of up to $10^{-4} \sim 10^{-3}$ S/cm at room temperature, is stable in a high voltage region, and is stable in air. Thus, it has the advantage of being easy to synthesize and handle.

Therefore, it is possible to compensate for the disadvantages of each material through the preparation of a composite solid electrolyte by mixing the first polymer and a heterogeneous material according to the present invention.

Since the oxide-based or phosphate-based solid electrolyte does not easily burn or cause ignition even under high temperature conditions of 400 °C or higher, high temperature stability is high. Therefore, if the ceramic ion conductor includes the oxide-based or phosphate-based solid electrolyte, the mechanical strength of the composite solid electrolyte for the lithium secondary battery as well as high temperature stability and ionic conductivity can be improved.

In addition, the first process may include the steps of:

(1-1) preparing a composition for forming a first composite containing a first polymer having a cross-linkable functional group and a ceramic compound;
(1-2) unwinding the substrate film using an unwinder and supplying it to a conveying path;
(1-3) applying the composition for forming the first composite onto the substrate film to form a coating film;
(1-4) transferring the substrate film on which the coating film is formed to a freezing section to freeze the coating film;
(1-5) transferring the substrate film on which the frozen coating film is formed to a thawing section and thawing the frozen coating film and thus forming a physical cross-linkage between the first polymer and the ceramic compound to prepare a first composite layer; and
(1-6) winding and recovering the substrate film comprising the first composite layer using a rewinder.

The step (1-1) is a step of preparing a composition for forming a first composite containing a first polymer and a ceramic compound containing a cross-linkable functional group.

The composition for forming the first composite may be prepared by adding a ceramic compound to a solution of the first polymer having a cross-linkable functional group.

The solvent used in the preparation of the solution of the first polymer may be a polar solvent, for example water. That is, the solution of the first polymer may be an aqueous solution.

The concentration of the solution of the first polymer having the cross-linkable functional group can be appropriately adjusted in consideration of the extent to which the application process can proceed smoothly when the solution for forming the first composite is applied to the substrate film. For example, the first polymer having a cross-linkable functional group may be contained in an amount of 5 to 20% by weight relative to the total weight of the aqueous solution of the first polymer having the cross-linkable functional group, and specifically, may be contained in an amount of 5% by weight or more, 7% by weight or more, or 9% by weight or more and 13% by weight or less, 17% by weight or less, or 20% by weight or less. If the first polymer having the cross-linkable functional group is contained in an amount of less than 5% by weight, its concentration is so thin that it may run off when applied on a substrate film. If the first polymer having the cross-linkable functional group is contained in an amount exceeding 20% by weight, it may be difficult to apply in the form of a uniform foil.

In addition, the ceramic compound may be contained in an amount of 1 part by weight or more and less than 10 parts by weight relative to 1 part by weight of the first polymer having the cross-linkable functional group. More specifically, the weight ratio of the first polymer and the ceramic compound may be 1: 1, 1: 2, 1: 3, 1: 4, 1: 5, 1: 6, 1: 7, 1: 8 or 1: 9. If the ceramic compound is contained in an amount of less than 1 part by weight relative to 1 part by weight of the first polymer, there are problems in that after the sintering process in step (2) below, because the bonding between ceramic compounds is not smooth, it is difficult to form a ceramic ion conductor with a cross-linked structure, and its mechanical properties are also weak and thus it is easily brittle or destroyed, thereby making the preparation of a composite solid electrolyte impossible. In addition, if the ceramic compound is contained in an amount exceeding 10 parts by weight relative to 1 part by weight of the first polymer, there are problems that since the ceramic compound is not uniformly dispersed in the first polymer, a phenomenon in which the particles of the ceramic compound are agglomerated and aggregated with each other occurs, and a phase separation between the particles of the first polymer and the agglomerated ceramic compound occurs, thereby making it difficult to form a ceramic ion conductor layer, and as a result, a composite solid electrolyte with reduced ionic conductivity is prepared.

The step (1-2) is a step of unwinding the substrate film using an unwinder and supplying it to the conveying path.

The unwinder unwinds and supplies the substrate film wound in a roll shape to a predetermined conveying path, which may unwind and supply the substrate film by its own drive, and may unwind and supply the substrate film by the driving force of a rewinder that winds the substrate film including the first composite.

Accordingly, the first process of the present invention may be a roll-to-roll process.

The substrate film is not particularly limited as long as it can serve as a support to which the composition for forming the first composite solid electrolyte is applied. For example, the above substrate film may be stainless steel (SS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-ethyl acrylate copolymer film, ethylene-methyl acrylate copolymer film or polyimide film.

The step (1-3) is a step of applying the composition for forming the first composite onto the substrate film to form a coating film.

In the present invention, the coating method is not particularly limited as long as it is a method capable of applying the composition for forming the first composite on the substrate film in the form of a film. For example, the coating method may be bar coating, roll coating, spin coating, slit coating, die coating, blade coating, comma coating, slot die coating, lip coating, spray coating or solution casting.

In an embodiment of the present invention, a solution casting method may be used. More specifically, after putting the composition for forming the first composite prepared in the step (1-1) into a mixer, the mixer is placed on the substrate film, and the composition for forming the first composite is continuously cast on the substrate film supplied to the conveying path to form a coating film.

The step (1-4) is a step of transferring the substrate film on which the coating film is formed to a freezing section to freeze the coating film. In the step (1-4), a first composite layer can be prepared.

In the step (1-4), the first polymer and water contained in the first polymer aqueous solution containing the cross-linkable functional group may be phase separated. The phase separation may be induced because the strength of the hydrogen bond between the water molecules is stronger than that between the cross-linkable functional group and the water molecules. Water molecules aggregated by hydrogen bonds between the water molecules exist in the ice phase by a freezing process. As a result, the number of cross-linkable functional groups forming hydrogen bonds through interaction with the water molecules is significantly reduced.

Due to the phase separation, the inside of the coating film is divided into (i) a polymer-poor phase and (ii) a polymer-rich phase.

The (i) polymer-poor phase is a portion containing water molecules aggregated by hydrogen bonds between water molecules and exists as an ice phase, which can also be referred to as a free water state.

The (ii) polymer-rich phase is a portion containing a polymer phase separated from water. The phase-separated polymer is a polymer having a cross-linkable functional group that is free from interaction with water molecules, and is in a free state after phase separation, and does not form crystals by regular folding, and exists in an amorphous state with relatively free behavior, which is called an amorphous polymer chain.

In addition, some of the cross-linkable functional groups contained in the phase separated polymer form localized crystallites. The localized crystallites act as a cross-linkable junction point to form a cross-linked structure including the bonds (a) and (b).

The freezing of the coating film in the step (1-4) may be performed by appropriately selecting conditions sufficient to freeze the coating film. For example, the freezing temperature may be performed at a temperature of -30 °C to -10 °C, and specifically, the freezing temperature may be -30 °C or higher, -25 °C or higher, or -23 °C or higher, and may be -18 °C or lower, -15 °C or lower or -10 °C or lower. If the freezing temperature is less than -30 °C, cracks may occur in the coating film. If the freezing temperature exceeds -10 °C, formation of regions of amorphous polymer chains can be difficult because sufficient phase separation between the polymer and water is not achieved. In addition, the freezing may be performed in consideration of a sufficient freezing time within the range of 20 hours to 30 hours.

The freezing section is located in a section where the coating film is formed on the substrate film and the substrate film on which the coating film is formed is transferred to the rewinder, and the freezing section may be composed of a plurality of stages.

The step (1-5) is a step of transferring the substrate film on which the frozen coating film is formed to a thawing section and thawing the frozen coating film to prepare a first composite layer.

In the step (1-5), the ice included in the (i) polymer-poor phase melts and evaporates, and thus a first composite layer having an increased free volume can be prepared.

The thawing can be performed by appropriately selecting conditions capable of thawing to the extent that the frozen coating film can be applied as a solid polymer electrolyte. For example, the thawing temperature may be 15 °C to 35 °C or may be room temperature (25 °C). If the thawing temperature is less than 15 °C, moisture drying efficiency may decrease after thawing (ice melting). If the thawing temperature exceeds 35 °C, the coating film may shrink and thus cause wrinkles or warping.

As described above, through the step (1-4) of freezing the coating film and the step (1-5) of thawing the frozen coating film, the freezing and the thawing of the (a) and (b) may be induced to form a cross-linked structure and an amorphous polymer chain.

Therefore, the steps (1-4) and (1-5) may be repeatedly performed, and the degree of formation of the cross-linked structure may be adjusted according to the number of repetitions. When the step (1-4) and the step (1-5) are referred to as one cycle. The step (1-4) of freezing the coating film and step (1-5) of thawing the frozen coating film may be performed 1 cycle or more, 2 cycles or more, 3 cycles or more, or 5 cycles or more. The upper limit of the cycles is not particularly limited, but it may be 10 cycles or less, 13 cycles or less, or 15 cycles or less. As the number of cycles increases within the above range, more cross-linked structures can be formed, and thus the modulus and strength of the solid polymer electrolyte can be increased.

In the step (1-5), when the thawing is completed, the coating film can be applied as the first composite layer.

The thawing section is located in a section where the substrate film on which the frozen coating film is formed is transferred to the rewinder, and it may be composed of a plurality of stages.

In addition, a chemical cross-linker may be added to the composition for forming the first composite in the step (1-1), and by the chemical cross-linker, the cross-linked structure between the first polymer and the ceramic compound may be formed in step (1-4).

In the first composite layer, a cross-linked structure and an amorphous polymer chain may be formed by physical cross-linking in the freezing of the step (1-4). As described above, if a chemical cross-linker is added in step (1-1), a cross-linked structure can also be formed by chemical cross-linking.

Specifically, cross-linking between the first polymer having the cross-linkable functional group and the ceramic compound may be formed by the chemical cross-linker to form a cross-linked structure.

The chemical cross-linker may form a bond between the first polymers containing the cross-linkable functional group or a bond between the first polymer having the cross-linkable functional group and the ceramic compound.

The chemical cross-linker may include one or more selected from the group consisting of boric acid, glutaraldehyde, inorganic salts and metal salts, but is not limited to these examples, and any chemical cross-linker that forms the hydrogel of the first polymer is possible.

The step (1-6) is a step of winding and recovering the substrate film including the first composite layer using a rewinder.

The rewinder may wind and collect the substrate film including the first composite layer in a roll shape, and may wind the substrate film including the first composite by its own drive.

In the preparation method of the composite solid electrolyte of the present invention, the first process is a roll-to-roll process, and enables continuous preparation.

After the step (1-6), the second process may be continuously performed. The second process may include the steps of:

(2-1) unwinding the substrate film containing the first composite layer using an unwinder, peeling and slitting the first composite layer from the substrate film; and
(2-2) sintering the substrate film containing the slitted first composite layer to prepare a ceramic ion conductor layer.

The step (2-1) is a step of unwinding the substrate film including the first composite layer using an unwinder, and peeling and slitting the first composite layer from the substrate film.

The unwinder unwinds and supplies the substrate film comprising the first composite layer wound in a roll shape through a predetermined conveying path, which can unwind and supply the substrate film comprising the first composite layer by its own driving

Then, after peeling the first composite layer from the substrate film, slitting is performed to a desired area.

The step (2-2) is a step of sintering the slitted first composite layer to prepare a ceramic ion conductor layer.

As used herein, the term "sintering" refers to a process of applying sufficient temperature and pressure to make the first composite layer into a lump of harder particles.

The ceramic ion conductor may be prepared by sintering and thermally decomposing the first composite layer and sintering particles of the remaining ceramic compound.

Through the sintering process, the first polymer plays a role as a support so that the particles of the ceramic compound can be connected to each other, and the particles of the ceramic compound may be connected to each other to form a ceramic ion conductor layer having a cross-linked structure.

The ceramic ion conductor layer may comprise a cross-linked structure comprising a ceramic compound.

The ceramic ion conductor layer may play a role of forming an ion conduction path of lithium ions.

The sintering may be performed by properly selecting conditions sufficient to thermally decompose the first composite layer and to form a ceramic ion conductor layer of a cross-linked structure by connecting the structure of the particles of the ceramic compound to each other. For example, the sintering temperature may be performed at a temperature of 800 °C to 1300 °C, specifically, the sintering temperature may be 850 °C or more, 900 °C or more, 950 °C or more, and may be 1300 °C or less, 1250 °C or less, 1200 °C or less.

After the step (2-2), the third process may be continuously performed, the third process may comprise the steps of:

(3-1) preparing a composition comprising a second polymer and a lithium salt;
(3-2) coating the ceramic ion conductor layer with the composition; and
(3-3) drying the ceramic ion conductor layer coated with the composition to form a second composite layer.

The second composite layer can prepare a composite solid electrolyte with improved ionic conductivity by comprising the ceramic ion conductor layer.

The step (3-1) is a step of preparing a composition comprising the second polymer and the lithium salt.

The second polymer may be a polymer having excellent solubility for the lithium salt and allowing the polymer solution to permeate well into the ceramic ion conductor so that preparation of the final composite solid electrolyte is easy. Specific examples of the second polymer may include one or more selected from the group consisting of polyvinyl alcohol (PVA), polyethylene oxide (PEG), polyacrylate, poly(methyl methacrylate) (PMMA), PSTFSI, polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide), and amino-terminated polyethylene glycol (amino-terminated PEG).

In the present invention, the lithium salt is in a dissociated state inside the structure formed by the ceramic ion conductor layer to improve the ionic conductivity of the composite solid electrolyte. In addition, the lithium salt is mainly dissociated inside the second polymer, and in the second process, it can play a role of compensating for the loss of lithium ions generated from the particles of the ceramic compound during the high-temperature sintering process.

The lithium salt may comprise one or more selected from the group consisting of $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, $(CF_3SO_2)_2NLi$, and $(FSO_2)_2NLi$.

The composition may be prepared by adding the lithium salt to the solution containing the second polymer.

The solvent used in preparing the solution of the second polymer may be a polar solvent, for example water. That is, the solution of the second polymer may be an aqueous polymer solution.

The concentration of the solution containing the second polymer may be appropriately adjusted in consideration of the extent to which the coating process for coating the ceramic ion conductor layer can proceed smoothly. For example, the second polymer may be contained in an amount of 5 to 20% by weight based on the total weight of the solution of the second polymer, and specifically, may be contained in an amount of 5% by weight or more, 7% by weight or more, or 9% by weight or more, and in an amount of 13% by weight or less, 17% by weight or less, or 20% by weight or less. If the second polymer is contained in an amount of less than 5% by weight, since the concentration is too thin, the surface of the ceramic ion conductor layer cannot be coated. If the second polymer is contained in an amount exceeding 20% by weight, since the concentration is too high, it may be difficult to uniformly coat the surface of the ceramic ion conductor layer.

The molar ratio ([Li]/[G]) of molar concentration ([G]) of the second polymer and the lithium ([Li]) in the lithium salt may be 0.1 to 0.5, specifically 0.1 or more, 0.2 or more, or 0.3 or more, and may be 0.4 or less or 0.5 or less. If the molar ratio ([Li]/[G]) is less than 0.1, the content of the lithium salt is reduced, and the ionic conductivity of the composite solid electrolyte may be lowered, and if the molar ratio ([Li]/[G]) exceeds 0.5, the ionic conductivity may decrease due to aggregation of lithium ions. Therefore, the composite solid electrolyte according to the present invention requires the composition of the second polymer and an appropriate amount of lithium salt in the second composite layer.

The step (3-2) is a step of coating the ceramic ion conductor layer with the composition.

The coating method is not particularly limited as long as it is used in the art, and dipping, spraying, doctor blade or spin coating may be used, and dipping may be preferably used.

The step (3-3) is a step of drying the ceramic ion conductor layer coated with the composition to form the second composite.

The drying may be performed in an oven, and the drying temperature is not particularly limited as long as the temperature can dry the composition, but may be preferably a temperature of 80 to 100°C.

In addition, the coating of (3-2) and the drying of (3-3) may be repeated a plurality of times.

The ceramic ion conductor layer coated with the second composite layer is a composite solid electrolyte to be prepared in the present invention, and the composite solid electrolyte has improved ionic conductivity, and can specifically exhibit an ionic conductivity of $10^{-5}$ S/cm or more. Although the composite solid electrolyte is a solid electrolyte, it can improve the performance of an all-solid-state battery by exhibiting an ionic conductivity equal to or higher than that of conventional liquid electrolytes.

The preparation method of the composite solid electrolyte of the present invention is a continuous process in which the first to third processes are continuously performed, and enables mass production.

**Composite solid electrolyte**

In addition, the present invention
relates to a composite solid electrolyte, including: a conductor layer containing a ceramic compound; a second polymer; and a lithium salt, wherein the composite solid electrolyte may be prepared by the preparation method of the present invention described above.

Details of the ceramic ion conductor layer, the second polymer, and the lithium salt are the same as described above.

The ceramic ion conductor layer may be obtained by sintering the above-described first composite layer. Accordingly, the ceramic ion conductor layer may comprise a cross-linked structure between the ceramic compound and the first polymer having the cross-linkable functional group.

A conventional composite solid electrolyte was prepared by coating a solution or slurry, in which a polymer and an inorganic material were mixed and dispersed, on a substrate by a method such as a solution casting, and drying it. However, this method had a problem that the ionic conductivity of the solid electrolyte is not improved due to the non-uniform dispersion and precipitation of the inorganic materials in the polymer solution.

In order to improve this, the present invention intends to provide a composite solid electrolyte comprising a ceramic ion conductor layer including a cross-linked structure forming an ion conduction path of lithium ions, a second polymer and a lithium salt. The ceramic ion conductor can play a role of improving the ionic conductivity of the composite solid electrolyte by uniformly dispersing particles of the ceramic compound therein.

The composite solid electrolyte may be in the form of a free-standing film. The free-standing film means a film capable of maintaining a film shape by itself without a separate support at room temperature and normal pressure.

Since the free-standing film exhibits elasticity to minimize brittleness and has characteristics as a support that stably contains lithium ions, it may be in a suitable form as a composite solid electrolyte.

In the present invention, the ionic conductivity of the composite solid electrolyte may be $10^{-5}$ S/cm or more.

Although the composite solid electrolyte is a solid electrolyte, it can improve the performance of an all-solid-state battery by exhibiting an ionic conductivity equivalent to or higher than that of conventional liquid electrolytes.

**All-solid-state battery**

The present invention also relates to an all-solid-state battery including the composite solid electrolyte, wherein the all-solid-state battery includes a negative electrode, a positive electrode, and a composite solid electrolyte interposed between the negative electrode and the positive electrode, and the composite solid electrolyte is prepared by the preparation method described above and has the above-described characteristics.

Specifically, since the composite solid electrolyte includes a ceramic ion conductor and thus improves ion conductor of lithium ions, it may be suitable as an electrolyte for an all-solid-state battery.

In the present invention, the positive electrode contained in the all-solid-state battery includes a positive electrode active material layer, and the positive electrode active material layer may be formed on one surface of the positive electrode current collector.

The positive electrode active material layer includes a positive electrode active material, a binder, and a conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$ (wherein, M is any one or two or more elements selected from the group consisting of Al, Ga and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$ (wherein, $0 \leq a \leq 0.2$, $0.6 \leq b \leq 1$, $0 \leq b' \leq 0.2$, $0 \leq c \leq 0.2$; M comprises Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N); lithium manganese oxide such as Formula $Li_{1+y}Mn_{2-y}O_4$ (wherein, y is 0 - 0.33), $LiMnO_2$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M=Co, Mn, Al, Cu, Fe, Mg, B or Ga, y=0.01 - 0.3); lithium manganese composite oxide represented by Formula $LiMn_{2-y}M_yO_2$ (wherein, M=Co, Ni, Fe, Cr, Zn or Ta, y=0.01 - 0.1) or $Li_2Mn_3MO_8$ (wherein, M=Fe, Co, Ni, Cu or Zn); $LiMn_2O_4$ in which part of Li in the Formula is substituted with alkaline earth metal ions; disulfide compounds; and $Fe_2(MoO_4)_3$.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the conductive material, and assists in bonding to the current collector. The binder may comprise one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the conductive material is not particularly limited as long as it prevents side reactions in the internal environment of the all-solid-state battery and has excellent electrical conductivity without causing chemical changes in the battery. The conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more thereof as the conductive material, but is not necessarily limited thereto.

The conductive material may be generally contained in an amount of 0.5% by weight to 30% by weight based on the total weight of the positive electrode active material layer, and specifically, the content of the conductive material may be 0.5% by weight or more or 1% by weight or more, and may be 20% by weight or less or 30% by weight or less. If the content of the conductive material is too small, i.e., less than 0.5 % by weight, it is difficult to expect an effect of improving electrical conductivity or the electrochemical properties of the battery may be deteriorated. If the content of the conductive material exceeds 30% by weight and thus is too large, the amount of the positive electrode active material may be relatively small, so that the capacity and energy density may be lowered. A method for incorporating the conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the conductive material and the binder in an organic solvent, onto the positive electrode current collector, and optionally compression-molding it onto the current collector to improve the electrode density. At this time, as the organic solvent, it is preferable to use one that can uniformly disperse the positive electrode active material, the binder, and the conductive material and that evaporates easily. Specifically, acetonitrile, methanol, ethanol, tetrahydrofuran, water, isopropyl alcohol and the like are exemplified.

In the present invention, the negative electrode included in the all-solid-state battery comprises a negative electrode active material layer, and the negative electrode active material layer may be formed on one surface of the negative electrode current collector.

The negative electrode active material may be a material capable of reversibly intercalating or de-intercalating lithium ions ($Li^+$), a material capable of reacting with lithium ion to reversibly form a lithium-containing compound, lithium metal or a lithium alloy.

The material capable of reversibly intercalating or de-intercalating lithium ions ($Li^+$) may be, for example, crystalline carbon, amorphous carbon or mixtures thereof. The material capable of reacting with the lithium ion ($Li^+$) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the conductive material is the same as described above for the positive electrode active material layer.

In addition, the negative electrode current collector is not particularly limited as long as it has conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having fine irregularity on its surface, a sheet, a foil, a net, a porous body, a foam, and a non-woven fabric, as in the positive electrode current collector.

The preparation method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present invention.

In addition, the present invention provides a battery module comprising the all-solid-state battery as a unit cell, a battery pack comprising the battery module, and a device comprising the battery pack as a power source.

In this case, examples of the above device may comprise, but are not limited to, a power tool powered by an electric motor; electric cars including an electric vehicle (EV), a hybrid electric vehicle (HEV), a plug-in hybrid electric vehicle (PHEV), and the like; electric motorcycles including an electric bike (E-bike) and an electric scooter (E-scooter); an electric golf cart; and a power storage system.

Hereinafter, preferred examples are presented to aid understanding of the present invention, but the following examples are only illustrative of the present invention, and it will be apparent to those skilled in the art that various changes and modifications can be made within the scope and technical idea of the present invention, and also it is natural that such variations and modifications are within the scope of the appended claims.

In the following Examples and Comparative Examples, a ceramic ion conductor including a first polymer and a ceramic compound, etc. as described in Table 1 below was prepared, and a composite solid electrolyte comprising the same was prepared.

Table 1:

| | Polymer | Ceramic compound | Weight ratio of polymer and ceramic compound | Whether or not the freezing/tha wing process is applied | Whether or not chemical cross-linker is added |
|---|---|---|---|---|---|
| Example 1 | PVA | LLZO | 1: 2 | applied | X |
| Example 2 | PVA | LSTP | 1: 2 | applied | X |
| Example 3 | PVA | LLZO | 1: 10 | applied | X |
| Example 4 | PVA | LLZO | 10: 1 | applied | X |
| Example 5 | PVA | LLZO | 1: 2 | non-applied | O |
| Example 6 | PVA | LLZO | 1: 10 | non-applied | O |
| Example 7 | PVA | LLZO | 10: 1 | non-applied | O |
| Compara tive Example 1 | PVA | LLZO | 1: 2 | non-applied (80 °C drying) | X |
| Compara tive Example 2 | PEO | LLZO | 1: 2 | applied | X |
| Compara tive Example 3 | Poly (acryli c acid) | LLZO | 1: 2 | applied | X |

**Example 1. Preparation of composite solid electrolyte**

**(1) Preparation of the first composite layer**

PVA (Mw: 89,000 g/mol; degree of hydrolysis: > 99%) was mixed with DI water to prepare a 10 wt.% PVA aqueous solution. To the PVA aqueous solution, LLZO powder, which is a ceramic compound, was added to prepare a solution. At this time, the weight ratio of PVA and LLZO was set to 1:2.

The solution was put into a mixer, and then, applied by the solution casting method on SS foil, which is a substrate film supplied to the transfer path by the unwinder, and then it was transferred to the freezing section and frozen at -20°C for 24 hours, and then, it was transferred to the thawing section and thawed at 25°C, thereby inducing physical cross-linkage of the PVA and thus preparing a first composite layer on the substrate film. The substrate film containing the prepared first composite layer was wound and recovered using a rewinder. After that, the substrate film was peeled off to obtain a first composite layer in the form of a hydrogel.

**(2) Preparation of ceramic ion conductor layer**

After peeling the first composite layer from the substrate film containing the first composite layer supplied to the transport path by the unwinder, the peeled first composite layer was slit into a desired size. The slitted first composite layer was heated from room temperature to 800 °C at a rate of 1 °C/min and sintered at 800 °C for 2 hours to thermally decompose the PVA hydrogel contained in the first composite layer, and thus a ceramic ion conductor layer formed by sintering the remaining LLZO particles was prepared.

**(3) Preparation of composite solid electrolyte**

A solution containing PEO and LiTFSI was prepared (wherein, the molar ratio ([Li]/[O]) of "O" contained in PEO and "Li" contained in the lithium salt is 0.4). After immersing the ceramic ion conductor layer in the prepared solution for 5 minutes, it was dried in a vacuum drying oven at a temperature of 100 °C for 12 hours to prepare a composite solid electrolyte.

### Example 2

A composite solid electrolyte was prepared in the same manner as in Example 1, except that LSTP is used instead of LLZO, which is a ceramic compound.

### Example 3

A composite solid electrolyte was prepared in the same manner as in Example 1, except that the weight ratio of the polymer (PVA) and the ceramic compound (LLZO) is 1: 10.

### Example 4

A composite solid electrolyte was prepared in the same manner as in Example 1, except that the weight ratio of the polymer (PVA) and the ceramic compound (LLZO) is 10: 1.

### Example 5

A composite solid electrolyte was prepared in the same manner as in Example 1, except that instead of the freezing and thawing process, 0.1 mL of boric acid (1 wt.% aqueous solution) as a chemical cross-linker is added to 20 mL of a solution containing the polymer (PVA) and the ceramic compound, and stirred by a magnetic stirrer at 200 rpm/1 hour, thereby preparing the first composite layer of a hydrogel-type by chemical cross-linkage.

### Example 6

A composite solid electrolyte was prepared in the same manner as in Example 5, except that the weight ratio of the polymer (PVA) and the ceramic compound (LLZO) is 1: 10.

### Example 7

A composite solid electrolyte was prepared in the same manner as in Example 5, except that the weight ratio of the polymer (PVA) and the ceramic compound (LLZO) is 10: 1.

### Comparative Example 1

A composite solid electrolyte was prepared in the same manner as in Example 1, except that a solution containing the polymer (PVA) and the ceramic compound (LLZO) is prepared, the solution is applied on a glass slide as a substrate, and then, instead of a freezing and thawing process, it is dried at 80 °C for 12 hours.

### Comparative Example 2

A composite solid electrolyte was prepared in the same manner as in Example 1, except that instead of the polymer (PVA), PEO (Mw: 4,000,000 g/mol) which is a polymer that does not have a cross-linkable functional group is used.

### Comparative Example 3

A composite solid electrolyte was prepared in the same manner as in Example 1, except that instead of the polymer (PVA), poly(acrylic acid) 35% aqueous solution (Mw: 100,000 g/mol) is used.

### Experimental Example 1

In order to measure the ionic conductivity of the composite solid electrolytes in the form of films prepared in the Examples and the Comparative Examples, the composite solid electrolyte was punched out in a circle with a size of 1.7671 $cm^2$, and the punched composite solid electrolyte was placed between two sheets of stainless steel (SS) to prepare a coin cell.

Using an electrochemical impedance spectrometer (EIS, VM3, Bio Logic Science Instrument), the resistance was measured under conditions of an amplitude of 10 mV and a scan range of 500 KHz to 20 MHz at 25 °C, and then, using Equation 1 below, the ionic conductivity of the composite solid electrolyte was calculated.

[Equation 1]

$$\sigma_i = \frac{L}{RA}$$

In Equation 1 above, $\sigma_i$ is the ionic conductivity (S/cm) of the composite solid electrolyte, R is the resistance ($\Omega$) of the composite solid electrolyte measured by the electrochemical impedance spectrometer, L is the thickness of the composite solid electrolyte ($\mu$m), and A is the area of the composite solid electrolyte ($cm^2$).

The ionic conductivity of the composite solid electrolyte calculated using Equation 1 above, the possibility of forming the hydrogel, the possibility of forming a free-standing film, and the results of observing the appearance of the composite solid electrolyte are shown in Table 2 below. At this time, the possibility of forming the hydrogel (formation: o, non-formation: X), the possibility of forming the free-standing film (formation: o, non-formation: X) and the appearance of the composite solid electrolyte were visually observed.

Table 2:

| | Ionic conductivity (S/cm) | Possibility of forming the hydrogel | Possibility of forming the free-standing film | Remarks |
|---|---|---|---|---|
| Example 1 | $2.1 \times 10^{-5}$ | O | O | - |
| Example 2 | $1.7 \times 10^{-5}$ | O | O | - |
| Example 3 | - | O | - | Impossible to prepare solution (aggregati on of ceramic particles) |
| Example 4 | - | O | - | Impossible to form ionic conductor after sintering |
| Example 5 | $1.5 \times 10^{-5}$ | O | O | |
| Example 6 | - | O | - | Impossible to prepare solution (aggregati on of ceramic particles) |
| Example 7 | - | O | - | Impossible to form ionic conductor after sintering |
| Compara tive Example 1 | not measurable | X | X | Formation of brittle film without |
| | | | | cross-linked structure, Impossible to form ionic conductor after sintering |
| Compara tive Example 2 | not measurable | X | X | Impossible to form hydrogel after freezing/t hawing |
| Compara tive Example 3 | not measurable | X | X | Impossible to form hydrogel after freezing/t hawing |

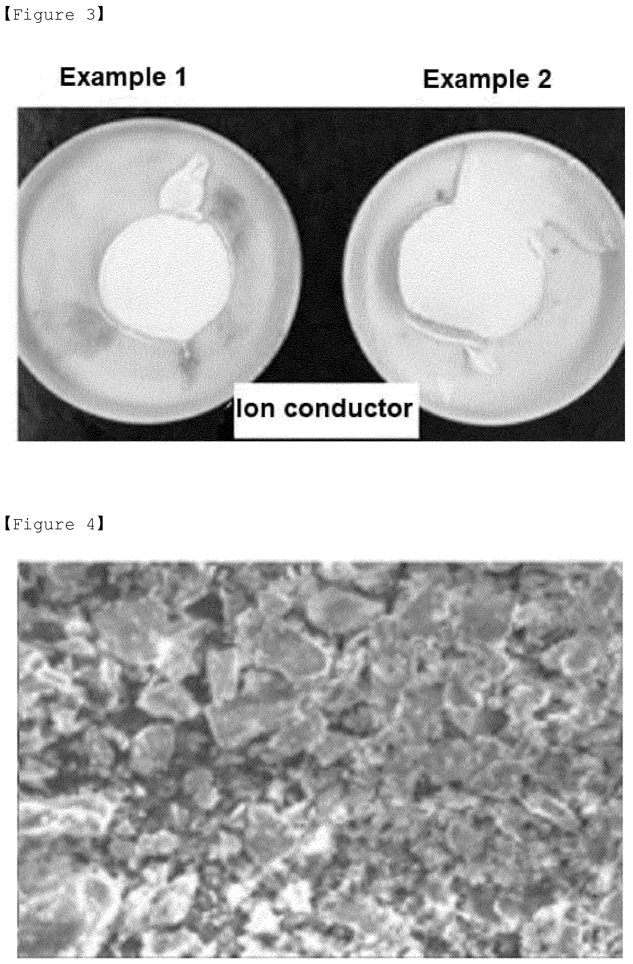

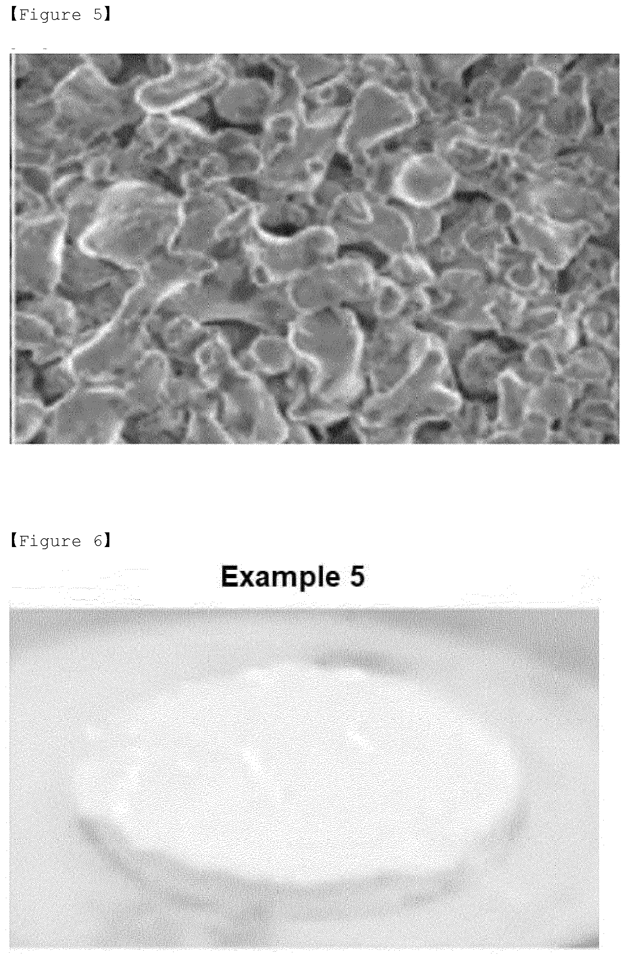

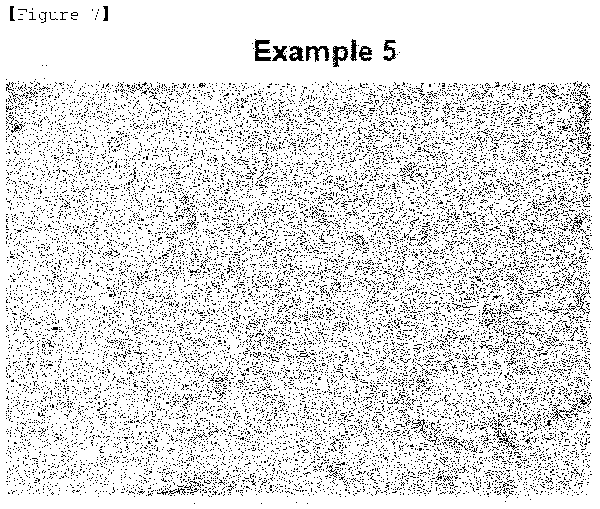

As shown in Table 2 above, it was confirmed that a first composite layer can be formed by applying a freezing and thawing process to a solution in which a first polymer and a ceramic compound containing the cross-linkable functional group are mixed in an appropriate range of weight ratio, and a composite solid electrolyte can be prepared by sintering the first composite layer to form a ceramic ion conductor layer (Examples 1, 2 and 5(FIGs. 2 to 7).

In Comparative Example 1, a film with a brittle mechanical property having no cross-linked structure, which is an electrolyte prepared using a high-temperature drying process at 80 °C, was formed, and no ceramic ion conductor was formed after sintering.

In Comparative Examples 2 and 3, it was prepared using a polymer that did not contain a cross-linkable functional group, and the first composite layer in the form of a hydrogel was not formed.

In the above, although the present invention has been described by way of limited embodiments, the present invention is not limited thereto, and it is apparent to those skilled in the art that various modifications and variations can be made within the equivalent scope of the technical spirit of the present invention and the claims to be described below.

**Claims**

1. A method for preparing a composite solid electrolyte, comprising:

   (1) a first process of preparing a first composite layer by mixing a first polymer having a cross-linkable functional group and a ceramic compound;
   (2) a second process of preparing a ceramic ion conductor layer by sintering the first composite layer; and
   (3) a third process of preparing a second composite layer by coating the ceramic ion conductor layer with a composition containing a second polymer and a lithium salt,

   wherein the first to third processes are performed continuously.

2. The method for preparing a composite solid electrolyte according to claim 1, wherein the cross-linkable functional group comprises one or more selected from the group consisting of a hydroxyl group, a carboxyl group, and an amide group.

3. The method for preparing a composite solid electrolyte according to claim 1, wherein the first polymer containing the cross-linkable functional group comprises one or more selected from the group consisting of polyvinyl alcohol (PVA), gelatin, methylcellulose, agar, dextran, poly(vinyl pyrrolidone), poly(acryl amide), starch-carboxymethyl cellulose, hyaluronic acid-methylcellulose, chitosan, poly(N-isopropylacrylamide), and amino-terminated polyethylene glycol (amino-terminated PEG) .

4. The method for preparing a composite solid electrolyte according to claim 1, wherein the ceramic compound comprises one or more selected from the group consisting of lithium-lanthanum-zirconium oxide based (LLZO), lithium-silicon-titanium phosphate based (LSTP), lithium-lanthanum-titanium oxide based (LLTO), lithium-aluminum-titanium phosphate based (LATP), lithium-aluminum-germanium phosphate based (LAGP) and lithium-lanthanum-zirconium-titanium oxide based (LLZTO) compounds.

5. The method for preparing a composite solid electrolyte according to claim 1, wherein the ceramic compound is included in an amount of 1 part by weight or more and less than 10 parts by weight based on 1 part by weight of the first polymer.

6. The method for preparing a composite solid electrolyte according to claim 1,
   wherein the first process comprises the steps of:

   (1-1) preparing a composition for forming the first composite layer containing the first polymer and the ceramic compound having a cross-linkable functional group;
   (1-2) unwinding a substrate film using an unwinder and supplying it to a conveying path;
   (1-3) applying the composition for forming the first composite layer onto the substrate film to form a coating film;
   (1-4) transferring the substrate film on which the coating film is formed to a freezing section to freeze the coating film;
   (1-5) transferring the substrate film on which the frozen coating film is formed to a thawing section and thawing the frozen coating film to prepare the first composite layer; and
   (1-6) winding and recovering the substrate film comprising the first composite layer using a rewinder.

7. The method for preparing a composite solid electrolyte according to claim 6, wherein the first composite layer comprises a cross-linked structure between the first polymer and the ceramic compound, and an amorphous polymer chain containing a cross-linkable functional group,

   wherein the cross-linked structure between the first polymer and the ceramic compound, and the amorphous polymer chain containing the cross-linkable functional group are formed in the step (1-4), and
   the cross-linked structure comprises (a) cross-linkage between cross-linkable functional groups and (b) cross-linking between cross-linkable functional groups and ceramic compounds comprises a bond by Lewis acid-base interaction.

8. The method for preparing a composite solid electrolyte according to claim 6, comprising adding a chemical cross-linker to the composition for forming the first composite in the step (1-1), forming a cross-linked structure between the first polymer and the ceramic compound and an amorphous polymer chain containing the cross-linkable functional group in the step (1-4) .

9. The method for preparing a composite solid electrolyte according to claim 6, wherein the freezing is performed at -30 °C to -10 °C.

10. The method for preparing a composite solid electrolyte according to claim 6, wherein the thawing is performed at 15 °C to 35 °C.

11. The method for preparing a composite solid electrolyte according to claim 6, wherein the freezing of the step (1-4) and the thawing of the step (1-5) are repeated.

12. The method for preparing a composite solid electrolyte according to claim 6, wherein after the step (1-6), the second process comprises the steps of:

    (2-1) unwinding the substrate film containing the first composite layer using an unwinder, peeling and slitting the first composite layer from the substrate film; and
    (2-2) sintering the slitted first composite layer to prepare a ceramic ion conductor layer.

13. The method for preparing a composite solid electrolyte according to claim 12, wherein the sintering is performed at 800 °C to 1300 °C.

14. The method for preparing a composite solid electrolyte according to claim 13, wherein after the step (2-2), the third process comprises the steps of:

    (3-1) preparing a composition comprising the second polymer and the lithium salt;
    (3-2) coating the ceramic ion conductor layer with the composition; and
    (3-3) drying the coating layer to form a second composite layer.

15. The method for preparing a composite solid electrolyte according to claim 1, wherein the second polymer comprises one or more selected from the group consisting of polyvinyl alcohol (PVA), polyethylene oxide (PEG), polyacrylate, poly(methyl methacrylate) (PMMA), PSTFSI, polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide) and amino-terminated polyethylene glycol (amino-terminated PEG).

16. The method for preparing a composite solid electrolyte according to claim 1, wherein the lithium salt comprises one or more selected from the group consisting of $LiNO_3$, $LiOH$, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $LiSCN$, $LiC(CF_3SO_2)_3$, $(CF_3SO_2)_2NLi$, and $(FSO_2)_2NLi$.

17. The method for preparing a composite solid electrolyte according to claim 1, wherein the molar ratio of lithium ([Li]) to the molar concentration ([G]) of the second polymer is 0.1 to 0.5.

18. The method for preparing a composite solid electrolyte according to claim 1, wherein the ionic conductivity of the composite solid electrolyte is $10^{-5}$ S/cm or more.

19. A composite solid electrolyte prepared by the preparation method of claim 1, comprising a ceramic ion conductor layer containing a ceramic compound, a second polymer, and a lithium salt.

20. An all-solid-state battery comprising the composite solid electrolyte prepared by the preparation method of claim 1.

【Figure 1】

【Figure 2】

【Figure 3】

**Example 1**　　　　**Example 2**

Ion conductor

【Figure 4】

【Figure 5】

【Figure 6】

Example 5

【Figure 7】

## Example 5

【Figure 8】

Comparative Example 1

## INTERNATIONAL SEARCH REPORT

| | International application No. |
|---|---|
| | **PCT/KR2023/007477** |

**A. CLASSIFICATION OF SUBJECT MATTER**

**H01M 10/056**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/056(2010.01); H01B 1/06(2006.01); H01B 13/00(2006.01); H01G 11/56(2013.01); H01M 10/052(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 가교 결합성 작용기(crosslinkable functional group), 고분자(polymer), 세라믹(ceramic), 경화(crosslinking), 냉각(cooling), 소결(sintering), 리튬 염(lithium salt)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0021797 A (QUANTUMSCAPE CORPORATION) 05 March 2018 (2018-03-05) See paragraphs [0004], [0070], [0142], [0159]-[0160], [0172] and [0207]; and claims 26-28, 98, 103-104, 159 and 177-178. | 1-5,15-20 |
| Y | | 6-14 |
| Y | JP 2019-029330 A (INST NUCLEAR ENERGY RESEARCH ROCAEC) 21 February 2019 (2019-02-21) See paragraphs [0042], [0056] and [0072]; and claims 1 and 5-6. | 6-14 |
| A | KR 10-2016-0021831 A (HYDRO-QUEBEC) 26 February 2016 (2016-02-26) See entire document. | 1-20 |
| A | KR 10-2016-0079405 A (HYUNDAI MOTOR COMPANY) 06 July 2016 (2016-07-06) See entire document. | 1-20 |
| A | KR 10-2021-0045832 A (GRINERGY INC.) 27 April 2021 (2021-04-27) See entire document. | 1-20 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 September 2023** | **01 September 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="3" align="center">**INTERNATIONAL SEARCH REPORT**<br>Information on patent family members</td><td colspan="2">International application No.<br><br>**PCT/KR2023/007477**</td></tr>
</table>

| Patent document cited in search report | | | Publication date (day/month/year) | Patent family member(s) | | | Publication date (day/month/year) |
|---|---|---|---|---|---|---|---|
| KR | 10-2018-0021797 | A | 05 March 2018 | CN | 107710455 | A | 16 February 2018 |
| | | | | CN | 107710455 | B | 17 December 2021 |
| | | | | CN | 114388879 | A | 22 April 2022 |
| | | | | EP | 3314681 | A1 | 02 May 2018 |
| | | | | EP | 3314681 | A4 | 06 March 2019 |
| | | | | EP | 3314681 | B1 | 21 July 2021 |
| | | | | EP | 3979382 | A1 | 06 April 2022 |
| | | | | JP | 2018-521173 | A | 02 August 2018 |
| | | | | JP | 2022-017247 | A | 25 January 2022 |
| | | | | JP | 6956641 | B2 | 02 November 2021 |
| | | | | US | 10374254 | B2 | 06 August 2019 |
| | | | | US | 11145898 | B2 | 12 October 2021 |
| | | | | US | 2017-0005367 | A1 | 05 January 2017 |
| | | | | US | 2020-0067137 | A1 | 27 February 2020 |
| | | | | US | 2022-0077495 | A1 | 10 March 2022 |
| | | | | WO | 2016-210371 | A1 | 29 December 2016 |
| JP | 2019-029330 | A | 21 February 2019 | TW | 201909465 | A | 01 March 2019 |
| | | | | TW | I667829 | B | 01 August 2019 |
| | | | | US | 2019-0036157 | A1 | 31 January 2019 |
| KR | 10-2016-0021831 | A | 26 February 2016 | CA | 2820635 | A1 | 21 December 2014 |
| | | | | CA | 2911628 | A1 | 24 December 2014 |
| | | | | CA | 2911628 | C | 02 August 2022 |
| | | | | CN | 105409032 | A | 16 March 2016 |
| | | | | CN | 105409032 | B | 18 October 2019 |
| | | | | EP | 3011615 | A1 | 27 April 2016 |
| | | | | EP | 3011615 | A4 | 22 February 2017 |
| | | | | EP | 3011615 | B1 | 01 April 2020 |
| | | | | ES | 2802926 | T3 | 21 January 2021 |
| | | | | JP | 2016-524803 | A | 18 August 2016 |
| | | | | JP | 6530385 | B2 | 12 June 2019 |
| | | | | KR | 10-2224361 | B1 | 09 March 2021 |
| | | | | US | 10320029 | B2 | 11 June 2019 |
| | | | | US | 2016-0149261 | A1 | 26 May 2016 |
| | | | | WO | 2014-201568 | A1 | 24 December 2014 |
| KR | 10-2016-0079405 | A | 06 July 2016 | KR | 10-1655627 | B1 | 07 September 2016 |
| KR | 10-2021-0045832 | A | 27 April 2021 | KR | 10-2310319 | B1 | 08 October 2021 |

Form PCT/ISA/210 (patent family annex) (July 2022)

**EP 4 456 237 A1**

**REFERENCES CITED IN THE DESCRIPTION**

**Patent documents cited in the description**

- KR 1020220066945
- KR 1020230070136
- KR 1020170045011